Europäisches Patentamt

European Patent Office

Office européen des brevets

(11) Publication number: **0 208 043**
**A1**

# EUROPEAN PATENT APPLICATION

(21) Application number: 85850236.2

(51) Int. Cl.⁴: **B01D 39/18 , E02B 11/00**

(22) Date of filing: 12.07.85

(43) Date of publication of application:
14.01.87 Bulletin 87/03

(84) Designated Contracting States:
AT BE DE FR GB NL SE

(71) Applicant: Jansrudvangen, Rolf
O. Schoyens vel 11
N-2200 Kongsvinger(NO)

(72) Inventor: Jansrudvangen, Rolf
O. Schoyens vel 11
N-2200 Kongsvinger(NO)

(74) Representative: Palm, Marianne et al
H. ALBIHNS PATENTBYRA AB Box 7664
S-103 94 Stockholm(SE)

(54) Method of producing a strip-formed filter for use in drainage.

(57) A method of producing a strip-formed filter for use in drainage, particularly for utilization in connection with plastic drainpipes of considerable length, consisting of a core of fiber material where the core is enclosed by a hose-or stocking-formed casing of water permeable material. Long-fibered peat material is compressed in moist state into a continous flat sheet, and the sheet is laid on a strip of craped kraft paper or other suitable water permeable material having a greater width than the circumference of the cross-section of the sheet. The longitudinal edges of the strip are overlapped and attached to each other, particularly by gluing.

Fig. 1

## Method of producing a strip-formed filter for use in drainage

The present invention relates to a method of producing a strip-formed filter for use in drainage, particularly intended for utilization in connection with plastic drainpipes of considerable length.

Formerly, trenched drainpipes were made of baked clay, and the drainage took place through the porous structure. Due to the great number of small pores over the entire surface of the pipe, this type of pipe could lie in the ground for quite a long time without losing its drainage capability.

In the past 20 to 25 years, we have mainly used drainpipes made of plastic. The type used most predominantly today is a thin-walled corrugated pipe where the corrugation runs crosswise to the length of the pipe. The pipe is in itself watertight, and the openings for drainage are made in the peaks of the waves along the entire --or a part of the --circumference of the pipe, as a rule over a section of the circumference which is less than 180°. Practice has shown that these openings have a tendency with time to become clogged by small particles accompanying the stream of water.

This problem can be solved or at least alleviated in several ways. Before the excavated earth mass is refilled, graduated gravel or coarse sand may be laid over the pipes to prevent, for example, fine sand or clay from coming in directly against the drainage openings. This would, of course, provide a certain degree of help; but, in the first place, graduated gravel or coarse sand always contains a certain amount of small particles, so-called "slag". With time, these particles could stream in against the drainage openings in the drainpipe together with the water and clog these up.

The material that is decidedly best for filtration of drainage water is vegetable material, such as bark in a somewhat finely particled form, peat moss, and --particularly suitable --wooden chips. Such materials have been used to some extent, but with the disadvantage that it is expensive and partly also difficult to lay loose material on top of the laid pipe in the trench. A substantial portion of the this type of pipe is laid by means of a special power shovel with an excavating wheel, whereby the pipe is fed downwards from a coil directly behind the excavating wheel and the excavated earth mass is immediately replaced atop the pipe by the excavating wheel. Attempting to lay loose mass on top of the pipe using such machines would be problematic. If the drainpipes are laid in an open trench which is refilled through a separate operation, then such mass can,of course, be laid on top of the pipes relatively easily. However, the mass would be applied quite irregularly, since it would have to be thrown down into the trench by hand, from, for example, the carriage of a tractor. There would then be a tendency for the wood chips or similar material to be left lying in clumps on top of the pipe.

Several attempts have been made to arrive at a filter in the form of a strip which can be laid down on top of the drainpipe to prevent small particles from flowing in against the drainage openings together with the water and clogging these. The most industrious efforts have been made with strips of mineral wool. Such mineral wool--for example, glass wool or rock wool --has a relatively good filtering capability. It seems, however, that this material has a catalytic effect on iron particles in the water. Nearly all drainage water contains large or small quantities of iron. These iron particles in connection with a mineral wool filter would have a tendency to oxidize at the drainage openings. This is, of course, dependent on the water's having good access to oxygen at this point. In any case, the result is that the drainage openings in the drainpipes where mineral wool fiber has been used have a strong tendency to close up due to formation of rust. Rust clumps are actually formed, which clog up the openings. Therefore, such filters have, practically speaking, gone out of use.

As mentioned above, vegetable fibers are well suited for filtration of drainage water. Wood chips have been shown to be very suitable. However, wood chips have gradually become a scarce commodity, since this material can be used as raw material for a variety of applications. Thus, the price has of course become correspondingly high.

The object of the present invention is to procure a strip-formed filter for use in drainage, particularly for utilization in connection with plastic drainpipes of considerable length, which is inexpensive to produce, which can be continuously laid on top of a drainpipe that has been laid in a trench, and which has good filtration capability and does not have any catalytic effect in connection with oxidation of free iron in the water.

This is achieved according to the invention by means of a method of producing a strip-formed filter for use in drainage, particularly for utilization in connection with plastic drainpipes of considerable length, which consists of a core of fiber material enclosed in a hose-or stocking-formed casing of water permeable material, and which is characterized in that long-fibered peat material in moist state is compressed into a continuous flat sheet, that the sheet is laid on a strip of craped kraft paper or other suitable water permeable material having a greater width than the circumference of the cross-section of the sheet, and that the longitudinal edges of the strip are overlapped and attached to each other, particularly by gluing.

Additional features of the invention are disclosed in the subclaims.

In a peat bog, the fiber structure varies with the depth. In the uppermost layer, where the vegetable material forming the peat has not yet been broken down to any substantial degree, the peat material is long-fibered. The deeper one goes into the bog, the finer the structure becomes, until one comes to pure, rich humus soil. The material which is used in connection with the invention, then, is from the upper layer of a peat bog. The material is dehumidified until there remains a small residue of moisture which is sufficient to ensure that when the material is subjected to pressure, it will hold together well enough to be handled. There are probably also other materials of vegetable nature which would have the same capacity to hold together when compressed in the presence of a certain humidity. In this regard, it is conceivable that various types of mosses can be used in connection with the invention, and probably also certain forms of wood chips.

It has been shown that a strip of long-fibered peat material has a surprisingly good quality of holding together when this material is subjected to high pressure and in the presence of a certain humidity. The humidity need not be greater than what is present when no water may be pressed out of the material even though it is subjected to relatively high pressure. This strip can then be taken from the pressing location to a production stage where it is laid onto a strip of sheet-formed filtration material, preferably craped kraft paper which is laid around the entire circumference of the strip of compressed, damp vegetable material and secured with longitudinal edges attached to one another, so that a casing is formed on the outside of the strip of vegetable material. The finished filter strip can then be rolled up into a roll, which, for example, may be placed on a power shovel/excavating machine of the above mentioned type. The strip can thus in a simple manner be lowered into the excavated trench together with the drainpipe, and the excavating wheel can then throw the earth mass back on and close the trench immediately, as usual. Even if the strip-formed filter is stored for a long time, so that the moisture disappears, the fibers will be so intermatted and oriented in such a way that the strip will keep its shape under normal handling. Thus, even if the fiber material is completely dry, the strip-formed filter according to the invention could be stored and handled in the usual manner when being laid, without there being a risk of the fiber sheet's falling apart and caving into clumps with variable open sections.

In what follows, the invention will be explained in more detail with reference to the drawings which show a preferred embodiment of the invention as an example.

Fig. 1 shows a part of a strip-formed filter according to the invention, seen from the one flat side,

Fig. 2 is a cross-section view in accordance with the line II-II in fig. 1,

Fig. 3 is a cross-section through a trench, with a drainpipe upon which has been laid a strip-formed filter in accordance with the invention, and in

Fig. 4, it is illustrated how a drainpipe together with a filter according to the invention is laid simultaneously into a trench.

The filter according to the invention consists of a core 1 of long-fibered peat material which has been pressed together in moist state into a continuous strip-formed sheet. On the outside of this strip-formed sheet there is laid a casing 2 of water permeable material. A number of various types of materials have been tried, such as gauze, different forms of non-woven material, fine plastic netting and the like, but this special paper material has been shown to be completely unsurpassed both with regard to filtration properties and to production/technical characteristics.

The continuous sheet of peat material 1 is laid onto a strip of, for example, craped kraft paper which is to form the casing 2. The paper strip has a somewhat greater width than the circumference of the core and is folded at the longitudinal edges of the core in over the core, so that the longitudinal edges 7 and 8 are left overlapping one another. These edges are connected together, preferably by gluing. The end 9 of the strip-formed filter is also closed in some practical manner.

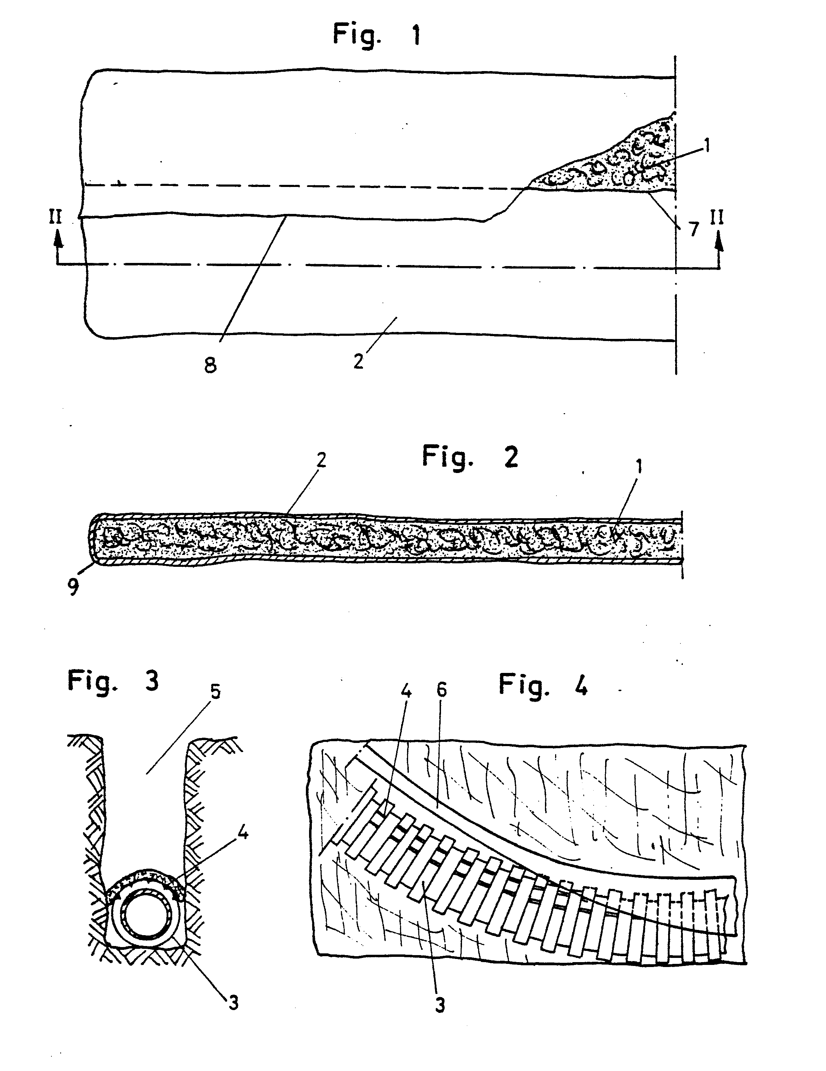

When a drainpipe 3 with drainage openings 4 is to be laid in the ground, a trench 5 is excavated with as small a diameter as possible to accommodate the pipe. As mentioned above, the flexible perforated pipes are often laid from rolls directly down into the trench after the excavating wheel on a special trenching power shovel. The pipe 3 is brought down toward the bottom of the trench behind the excavating wheel at a relatively steep angle. The strip-formed filter 6 (fig. 4) can be fed down into the trench together with the pipe 3, and the transverse dimension of the filter is adapted to the pipe 3, so that all of the drainage openings 4 are covered. Naturally, the pipe is laid down into the trench such that the drainage openings are facing upwards.

## Claims

1. Method of producing a strip-formed filter for use in drainage, particularly for utilization in connection with plastic drainpipes of considerable length, consisting of a core of fiber material, and where the core is enclosed by a hose-or stocking-formed casing of water permeable material, **characterized in** that long-fibered peat material in moist state is compressed into a continuous flat sheet, that the sheet is laid on a strip of craped kraft paper or other suitable water permeable material having a greater width than the circumference of the cross-section of the sheet, and that the longitudinal edges of the strip are overlapped and attached to each other, particularly by gluing.

2. The method according to claim 1, **characterized in** that small amounts of glue are added to the material during the compressing.

3. The method according to claim 1, **characterized** in that the moist long-fibered peat material is compressed to a volume which is less than 1/3 of the original volume of the material in loose state.

Fig. 1

Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-3 313 053 (E. COLANGELO) * claim 1; page 6, lines 10-19; figures 1, 2 * | 1 | B 01 D 39/18<br>E 02 B 11/00 |
| Y | DE-U-1 923 427 (C. RIPKEN) * claim 1; figure 1 * | 1 | |
| A | * claims 2-3; figure 2 * | 2 | |
| A | US-A-2 019 241 (H.F. WEISS) * claim 1 * | 1,2 | |
| A | DE-A-2 352 863 (C. RIPKEN) * claim 3; figure 1 * | 1 | |
| A | WASSER UND BODEN, vol. 2, 1976, pages 35-38; W. BURGHARDT "Porositätsmerkmale und Eigenschaften einiger Dränfilter" * table 1; picture 1, page 37 * | 1 | **TECHNICAL FIELDS SEARCHED (Int. Cl.4)**<br><br>B 01 D 23/14<br>B 01 D 39/18<br>E 02 B 11/00 |
| A | CHEMICAL ABSTRACTS, vol. 95, no. 17, 26th October 1981, page 339, column 1, abstract no. 155980e, Columbus, Ohio, US; V. SVOBODOVA "Decomposition of organic drainfilters in soils", & SCI. AGRIC. BOHEMOSLOV. 1981, 13(2), 107-118 | 1 | |

The present search report has been drawn up for all claims

| Place of search | Date of completion of the search | Examiner |
|---|---|---|
| BERLIN | 12-03-1986 | KUEHN P |